# EUROPEAN PATENT APPLICATION

(11) **EP 1 253 027 A1**
(43) Date of publication of application: **30.10.2002**
(21) Application number: 01830278.6
(22) Date of filing: 27.04.2001
(51) Int. Cl.: B60D 1/02, B60D 1/26

(54) **A device for opening trailer couplings**

(71) Applicant: V. Orlandi S.p.A., 25020 Flero (Brescia) (IT)
(72) Inventor: Inverardi, Angelo, 25030 Lograto (Brescia) (IT); Tagliaferri, Carlo, 25124 Brescia (IT)
(74) Representative: Tansini, Elio Fabrizio

(57) **Abstract**

An opening device (1) for trailer couplings (2) comprises a rotating actuator (7) to be mounted to a box-shaped body (6) disposed on the support structure (3) of the trailer coupling (2). The actuator (7) can be operatively associated with an operating mechanism (19) of a hitching pin (5) to shift it from a work position in which it engages a cavity (4) formed in the support structure (3) to a released position in which it does not engage the cavity (4). An intermediate kinematic mechanism (12) is provided for transmission of the rotating movement from the actuator (7) to the pin (5) by a reduction member (13) disposed laterally of the box-shaped body (6) or embodied therein.

A DEVICE FOR OPENING TRAILER COUPLINGS

## Description

The present invention relates to a device for opening trailer couplings comprising the features set forth in the preamble of claim 1.

The present invention is adapted for use in association with traditional trailer couplings designed to couple trailers to tractors.

In more detail, the concerned opening device can be mounted to trailer couplings provided with a substantially C-shaped support structure to be fastened to the rear part of a tractor. Arranged on an upper wall of the support structure is a box-shaped body containing an operating mechanism to vertically move a hitching pin between a work position in which it engages a cavity defined by the C-shaped conformation of the support structure, and an unhitched or released position in which the hitching pin is disengaged from the cavity.

When the hitching pin is in its released position, a trailer provided with an appropriate draft bar having a ring-shaped end can be secured to the tractor. This operation is carried out by inserting the ring-shaped end of the draft bar into the cavity of the support structure, said bar being subsequently brought into engagement with the support structure by displacement of the hitching pin from the released position to the work position.

Subsequently, in order to separate the trailer from the tractor, the hitching pin can be moved from the work position to the released position upon the action of an operator manually acting on a movement lever mechanically connected to the hitching pin through the operating mechanism.

In more detail, the movement lever extends from an end of a drive shaft rotatably engaged in the box-shaped body. The drive shaft carries an arm lending itself to act on the hitching pin, to bring it to the released position following an angular rotation imposed to the drive shaft itself through the movement lever.

Once the hitching pin has been raised, which will bring about, as a result, disengagement of the ring-shaped end of the trailer's draft bar, the trailer can be separated from the tractor.

It is known that there are opening devices for trailer couplings of the above described type that enable the operator to carry out a remote control of the movement of the hitching pin. In more detail, such devices allow the pin to be raised from the work position to the released position by a rotating actuator generally of the pneumatic type, laterally fastened to said box-shaped body and controlled by a valve, which is operatively connected to the operating mechanism of the trailer coupling.

In more detail, the rotating actuator has an output shaft connected in coaxial relationship through a coupling to the drive shaft being part of the operating mechanism.

The above described opening device therefore enables the hitching pin to be acted upon in order to move it to the corresponding released position, without requiring any manual intervention of an operator on the movement lever arranged on the trailer coupling.

However, it should be pointed out that the above described known solution has some drawbacks due to the great bulkiness of the opening device. In fact, in order to ensure a correct opening of the pin under any condition, use of an actuator capable of exerting a great force and, consequently, of big sizes, is required.

As a result, the opening device has an important overall bulkiness, which precludes possibility of use of same in the cases in which the spaces arranged on the tractor frame for installation of the trailer coupling are limited.

Accordingly, it is an aim of the present invention to solve the problems found in the known art, by proposing a more compact opening device for trailer couplings.

It is a further aim of the present invention to provide an opening device for trailer couplings to be applied to common trailer couplings already in use, while keeping the same operating features present in the known art, without particular adaptations being required.

The foregoing and further aims that will become more apparent in the course of the present description, are substantially achieved by an opening device for trailer couplings comprising the features set forth in the characterizing portion of claim 1.

Further features and advantages will be best understood from the detailed description of a preferred but not exclusive embodiment of an opening device for trailer couplings, in accordance with the present invention. This description will be taken hereinafter with reference to the accompanying drawings, given by way of non-limiting example, in which:

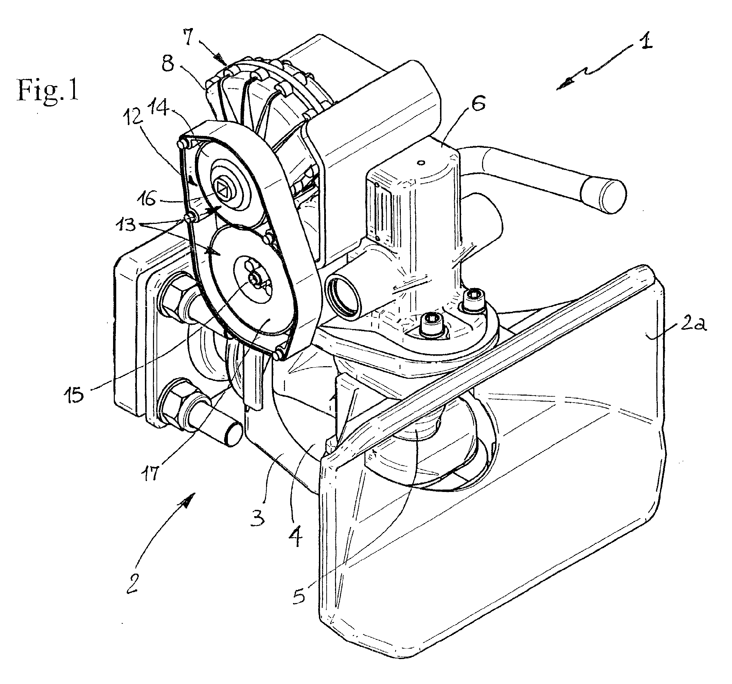

- Fig. 1 is a partly interrupted perspective view of the opening device associated with a trailer coupling in accordance with the present invention;
- Fig. 2 is a elevation view partly in section of the opening device shown in Fig. 1;
- Fig. 3 is a top view partly in section of the opening device shown in Fig. 1;
- Fig. 4 is a rear view partly in section of the opening device shown in Fig. 1.

With reference to the drawings, an opening device for trailer couplings in accordance with the present invention has been generally identified by reference numeral 1.

As viewed from the accompanying figures, the device 1 can be associated with a trailer coupling 2 that will be described hereinafter only in short, as it is known by itself.

The trailer coupling 2 comprises a substantially C-shaped support structure 3 defining a cavity 4 arranged to receive a ring-shaped end of a draft bar of known type (not shown in the accompanying figures), associated with a trailer.

The. trailer coupling 2 further comprises a hitching pin 5 having a substantially cylindrical conformation and longitudinally movable between a work position in which it engages cavity 4 for introduction into the ring-shaped end of the draft bar when the trailer is to be associated with the tractor, and an unhitched or released position in which it does not engage cavity 4 in order to enable disengagement of the trailer.

In more detail, the hitching pin 5 is moved by an operating mechanism 19 housed in a box-shaped body 6 secured to the support structure 3, at the upper part thereof. This operating mechanism 19 comprises a drive shaft 20 for control of the hitching pin 5, rotatably engaged in the box-shaped body 6.

The drive shaft 20 can rotate about an axis substantially transverse to the longitudinal extension of pin 5, between a first position corresponding to the work position of pin 5 and a second position corresponding to the released position of pin 5.

In more detail, the drive shaft 20 has an arm 20a radially extending from a median region of the longitudinal extension of shaft 20. Arm 20a acts on an engagement seat 21 of the hitching pin formed within the pin 5 itself.

In this way, when the drive shaft 20 is in the first position, arm 20a is disposed under the engagement seat 21 in the absence of interference with the latter, whereas when the drive shaft 20 rotates to the corresponding second position, the arm 20a moves upwardly pushing the engagement seat 21, and consequently urging the hitching pin 5 too upwardly, the latter being therefore disposed to the released position.

Extending from an end of the drive shaft 20 out of the box-shaped body 6 and in a substantially radial direction, is a lever 22 which is manually operable by an operator to angularly rotate the drive shaft 20 from the first to the second positions.

The opening device 1 comprises a fluid-operated actuator 7, preferably of the pneumatic type, to be fastened to the box-shaped body 6.

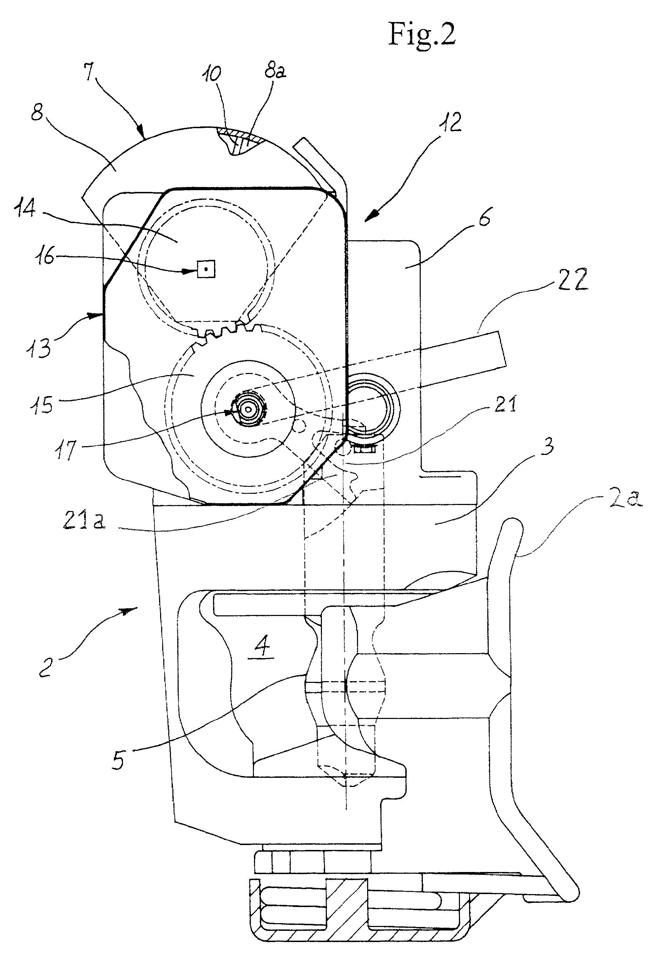

In particular, actuator 7 which is preferably of the rotating type, has a casing 8 in which a holding chamber 8a (partly shown in Fig. 2) is defined, said chamber having an arched outline concentric with a first rotation axis 9 transverse to the longitudinal extension of the hitching pin 6.

In conformity with the extension of the annular chamber 8a, casing 8 too has an arched substantially fan-shaped outline.

Actuator 7 further comprises a piston 10 movable within the holding chamber 8a along a direction lying in a plane substantially parallel to the longitudinal extension direction of the hitching pin 5.

Advantageously, actuator 7 is disposed at an upper surface 6a of the box-shaped body 6.

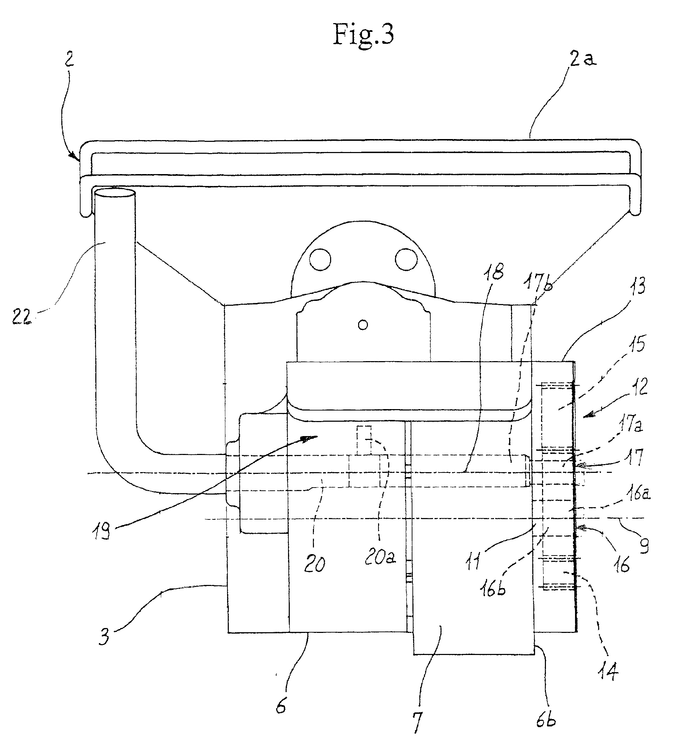

Under this situation, as more clearly shown in Fig. 3, the lateral bulkiness of said actuator 7 is included in the width of the box-shaped body 6. Piston 10 is associated through appropriate and known connecting means which therefore is not further described or shown, to a hub 11 coaxial with said first axis 9. Hub 11 is in turn associated with a kinematic intermediate mechanism 12 operatively interposed between the actuator 7 and the operating mechanism 19. It should be pointed out that, to the aims of the present description, by the term "kinematic intermediate mechanism" it is intended any gear drive apparatus in which there is not a direct transmission of motion to the operating mechanism 19 but said transmission of motion takes place through at least one driven member which is offset relative to the hub 11 of actuator 7.

This kinematic intermediate mechanism 12 preferably has a reduction member 13 comprising at least one first wheel 14 associated with a second wheel 15 which has a nominal diameter greater than the nominal diameter of the first wheel 14. Preferably, the first and second wheels 14, 15 peripherally have respective toothings 14a, 15a meshing with each other.

The intermediate kinematic mechanism 12 further comprises a first coupling 16 coaxial with the first rotation axis 9 and a second coupling 17 coaxial with a second rotation axis 18 which is substantially parallel to the first axis 9.

The first coupling 16 has a first end 16a coaxially in engagement with hub 11 and a second end 16b opposite to the first end 16a coaxially in engagement with the first wheel 14. The second coupling 17 in turn has a first end 17a coaxially in engagement with said second wheel 15 and a second end 17b opposite to the first end 17a, coaxially in engagement with the drive shaft 20 of the hitching pin 5 to cause rotation of same between a first position corresponding to the work position of pin 5 and a second position corresponding to the released position of said pin 5.

As better viewed from Fig. 3, the intermediate kinematic mechanism 12 extends in parallel and side by side relationship with a side wall 6b external to the box-shaped body 6, in such a manner that the lateral bulkiness of the whole trailer coupling 2 is in particular smaller than a lead-in bell 2a which is generally associated with the support structure 3.

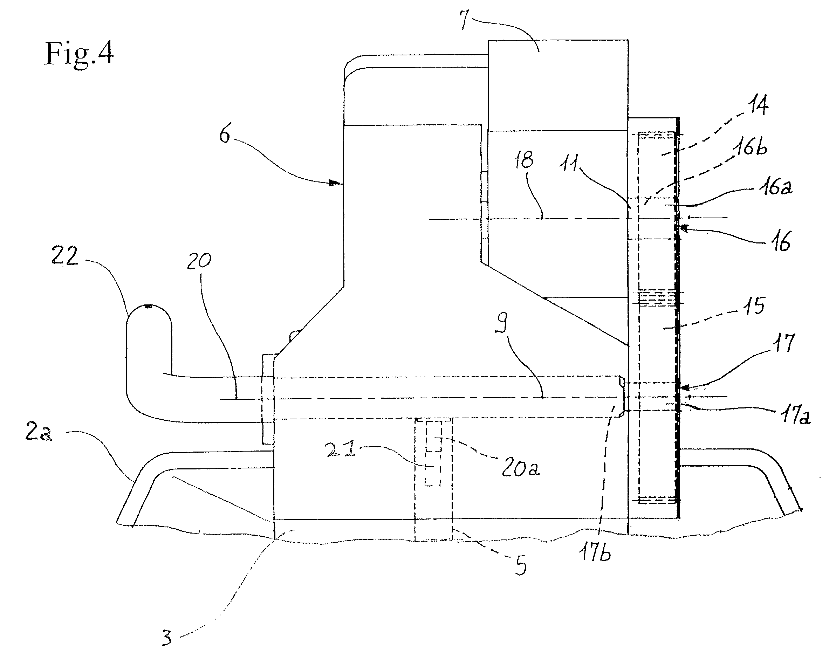

In addition, as better seen in Fig. 4, the lateral bulkiness of the intermediate kinematic mechanism 12 substantially corresponds to the length of coupling 17 projecting from the box-shaped body 6.

Advantageously, arrangement of a box-shaped body 6 such made that it can internally hold the intermediate kinematic mechanism 12 may be also provided.

The opening device 1 further comprise remote control means operatively connected with actuator 7 to operate the latter. In particular, the remote control means, not shown as it can be made in any known manner, can for example comprise a pneumatic feeder adapted to supply compressed air or another fluid under pressure to the holding chamber 8, through appropriate valve devices to be remote-controlled by a control box placed at a desired position on the vehicle.

Operation of device 1 described above mainly as regards structure, is as follows.

Starting from the initial condition in which the hitching pin 5 is in its work position, the operator acts on the actuation commands of the pneumatic feeder 24 delivering fluid under pressure to the holding chamber 8a of actuator 7. The fluid under pressure pushes piston 10 causing rotation of hub 11 around the first axis 9. The rotation movement is then transmitted by the first coupling 16 to the second coupling 17 through the reduction member 13. In this way, the drive shaft 20 made rigid with the second coupling 17 is caused to rotate from the first to the second positions.

Consequently, arm 20a moves upwardly thereby interfering with the engagement seat 21 of the hitching pin 5. Pin 5 is moved longitudinally upwardly to the corresponding released position, thus disengaging cavity 4.

Advantageously, the rotating actuator 7 may be provided to be of the double-acting type, i.e. also operable to move pin 5 from the released position to the work position.

The present invention achieves the intended purposes and important advantages are reached.

First of all bulkiness of the opening device 1 with respect to the relative trailer coupling 2 is optimized. In fact, due to use of the intermediate kinematic mechanism, actuator 7 can be placed on top of the box-shaped body 6.

In addition, device 1 has a more compact and smaller structure which is therefore very light in weight. This feature is due to the possibility of utilizing a rotating actuator 7 of reduced sizes as compared with actuators used in the known art. In fact the reduction member 13 connecting actuator 7 to the hitching pin 5 enables a reduction to be obtained in the force to be exerted by actuator 7 to carry out a rotation of a sufficient amount to rotate the drive shaft 20 of pin 5.

Consequently, a rotating actuator 7 of reduced sizes can be used which can be easily mounted on top of the trailer coupling 2. As shown in Fig. 3 illustrating the opening device 1 seen from top, the lateral bulkiness of the actuator 7 and of the intermediate kinematic mechanism 12 can be therefore contained within the width of the lead-in bell 2a of the trailer coupling 2.

## Claims

1. An opening device for trailer couplings comprising:
- an actuator (7) to be fastened to a box-shaped body (6) of a trailer coupling (2), and adapted to be operatively engaged with a drive shaft (20) of an operating mechanism (19) housed in the box-shaped body (6), to rotate said drive shaft (20) between a first position corresponding to a work position of a hitching pin (5) in which said pin (5) engages a cavity (4) formed in a support structure (3) of the trailer coupling (2), and a second position corresponding to a released position in which the pin (5) does not engage the cavity (4);
**characterized in that** it further comprises an intermediate kinematic mechanism (12) operatively interposed between the actuator (7) and the operating mechanism (19), to transmit movement from the actuator itself (7) to said drive shaft (20) of the pin (5).

2. A device as claimed in claim 1, wherein said intermediate kinematic mechanism (12) comprises a reduction member (13).

3. A device as claimed in claim 1, wherein said intermediate kinematic mechanism (12) comprises at least one first wheel (14) operatively associated with at least one second wheel (15) to transmit a rotating movement to the latter.

4. A device as claimed in claim 3, wherein said second wheel (15) has a nominal diameter greater than the nominal diameter of the first wheel (14).

5. A device as claimed in claim 3, wherein said first and second wheels (14, 15) comprise toothings (14a, 15a) extending along the peripheral extension of each wheel (14, 15) and meshing with each other.

6. A device as claimed in claim 3, wherein said first wheel (14) has a first rotation axis (9) transverse to the shifting direction of the hitching pin (5), and wherein said second wheel (15) has a second rotation axis (18) parallel to said first axis (9).

7. A device as claimed in claim 2, wherein said actuator (7) is a fluid-operated actuator, preferably of the pneumatic type.

8. A device as claimed in claim 6, wherein said actuator (7) is a rotating actuator operatively associated with the first wheel (14).

9. A device as claimed in claim 7, wherein said actuator (7) comprises:
- a holding chamber (8a) having an arched outline concentric with the first rotation axis (9);
- a piston (10) movable within said chamber (8a); and
- a hub (11) operatively in engagement with the first wheel (14) and rigidly connected to said piston (10).

10. A device as claimed in the preceding claim wherein said intermediate kinematic mechanism (12) further comprises:
- a first coupling (16) having a first end (16a) in engagement with the hub (11) and a second end (16b), opposite to the first one (16a), in engagement with said first wheel (14); and
- a second coupling (17) having a first end (17a) in engagement with said second wheel (15) and a second end (17b), opposite to the first one (17a), in engagement with the drive shaft (20) of the operating mechanism (19) to rotate said drive shaft (20) between the first and second positions.

11. A device as claimed in claim 9, comprising remote control means operatively connected with the actuator (7) to operate the latter.

12. A trailer coupling comprising:
- a support structure (3) having a substantially C-shaped conformation;
- a hitching pin (5) longitudinally movable between a work position in which it engages a cavity (4) defined by the conformation of the support structure (3), and an unhitched or released position in which it is disengaged from said cavity (4);
- a box-shaped body (6) disposed on top of said support structure (3); and
- an operating mechanism (19) put in said box-shaped body (6) and operatively connected to the hitching pin (5) to move the latter from the work position to the released position;
**characterized in that** it further comprises an opening device (1) as claimed in one or more of claims 1 to 10 and associated with said operating mechanism (19).

13. A trailer coupling as claimed in claim 12, wherein said intermediate kinematic mechanism (12) extends in parallel and side by side relationship with an outer side wall (6b) of the box-shaped body (6) and said rotating actuator (7) is secured to the box-shaped body (6) on top of said hitching pin (5).

14. A trailer coupling as claimed in claim 13, wherein the rotating actuator (7) has a piston (10) movable along a direction lying in a plane substantially parallel to the longitudinal extension direction of the hitching pin (5).
